# EUROPÄISCHE PATENTSCHRIFT

(11) **EP 1 660 362 B1**
(45) Veröffentlichungstag und Bekanntmachung des Hinweises auf die Patenterteilung: **23.04.2008**
(21) Anmeldenummer: 04764364.8
(22) Anmeldetag: 21.08.2004
(51) Int. Cl.: B60T 7/22, G01S 13/93, B60K 31/00

(54) **VORRICHTUNG UND VERFAHREN ZUR ERFASSUNG EINES MOMENTANEN ABSTANDES EINES KRAFTFAHREUGS VON EINEM HINDERNIS**
DEVICE AND METHOD FOR DETECTING THE MOMENTARY DISTANCE OF A MOTOR VEHICLE TO AN OBSTACLE
PROCEDE ET DISPOSITIF POUR SAISIR LA DISTANCE MOMENTANEE SEPARANT UN VEHICULE D'UN OBSTACLE

(30) Priorität: 06.09.2003 DE 10341128
(43) Veröffentlichungstag der Anmeldung: 31.05.2006
(73) Patentinhaber: Daimler AG, 70327 Stuttgart (DE)
(72) Erfinder: FUCHS, Alexander, 71069 Sindelfingen (DE); STEINER, Manfred, 71364 Winnenden (DE)
(86) Internationale Anmeldenummer: PCT/EP2004/009382
(87) Internationale Veröffentlichungsnummer: WO 2005/023613

(56) Entgegenhaltungen:
- EP-A- 1 318 491
- WO-A-03/064215
- DE-A- 4 333 357
- DE-A- 10 149 146
- DE-A- 19 934 670

## Beschreibung

Die Erfindung betrifft eine Vorrichtung zur Erfassung eines momentanen Abstandes eines Kraftfahrzeugs von einem Hindernis gemäß dem Oberbegriff des Anspruchs 1 und außerdem ein zugehöriges Verfahren gemäß dem Oberbegriff des Anspruchs 8.

Vorrichtungen der gattungsgemäßen Art sind z.B. unter der Bezeichnung "Parktronic" für die Anmelderin bekannt. Mit Hilfe einer solchen Vorrichtung kann dem Fahrer des Fahrzeugs das Rangieren in unübersichtlichen und beengten Verkehrsverhältnissen, insbesondere das Einparken, erleichtert werden, indem dieser vor Hindernissen gewarnt wird, die in seiner Fahrtrichtung liegen und deren Entfernung vom Fahrzeug kleiner als ein vorgegebener Grenzabstand ist. Solche Hindernisse können zum Beispiel herumliegende Gegenstände oder auch bewegte Hindernisse, wie andere Verkehrsteilnehmer sein.

Aus der DE 198 47 013 A1 ist ein Einparkhilfesystem für ein Fahrzeug bekannt, welches eine Messeinrichtung zum Messen des momentanen Abstands des Fahrzeugs von einem Hindernis, eine Auswerteeinrichtung und einen Warnsignalgeber umfasst. Die Auswerteeinrichtung vergleicht ein von der Messeinrichtung ausgegebenes Abstandssignal mit einem Abstandsgrenzwert, wobei der Warnsignalgeber ein für einen Fahrer des Fahrzeugs wahrnehmbares Warnsignal erzeugt, solange das Abstandssignal den Abstandsgrenzwert überschreitet. Die Auswerteeinrichtung legt dabei den Abstandsgrenzwert gemäß einer vorgegebenen Funktion des Bewegungszustandes des Fahrzeugs dynamisch fest. Damit verschafft sie dem Fahrer auch bei höherer Geschwindigkeit die Reaktionszeit, die notwendig ist, um das Fahrzeug zuverlässig vor dem Hindernis zum Stehen zu bringen.

Aus der DE 199 01 847 A1 sind ein Verfahren und eine Vorrichtung zur Erfassung von Objekten, insbesondere als Einparkhilfe-Assistenz-Vorrichtung in einem Kraftfahrzeug, bekannt. Die Vorrichtung umfasst eine Anzahl von Abstandssensoren, mindestens einen die Abstandssensoren ansteuernden Microcontroller und eine Ausgabeeinheit, wobei die Abstandssensoren mit einer zeitlich veränderlichen Kennung durch den Microcontroller beaufschlagbar sind. Durch die Beaufschlagung der Abstandssensoren mit dieser zeitlich veränderlichen Kennung ist es möglich, zuverlässig die empfangenen Signale eindeutig den Quellen zuzuordnen. Dadurch ist die Gefahr einer Beeinträchtigung der Abstandsmessung z.B. durch gesendete Signale von Abstandssensoren anderer Fahrzeuge reduziert.

Aus der WO 98/20364 ist ein Verfahren zur Abstandsmessung von Hindernissen aus einem Fahrzeug mit Hilfe eines Echoverfahrens, vorzugsweise eines Ultraschall-Verfahrens, bekannt, bei dem das Sendesignal von dem angestrahlten Objekt in Form eines Echos zum Fahrzeug zurückgeworfen wird und in dem Fahrzeug während eines zeitlichen Hörfensters in Abhängigkeit von einem Schwellenwert des Empfängers ein Warnsignal ausgelöst. Dabei hängen die zeitliche Lage und/oder die Dauer des Sendesignals und/oder der zeitliche Verlauf des Schwellenwertes während des Hörfensters von den Daten des Fahrzeugs ab. Sind beispielsweise die Vorderräder des Fahrzeugs um einen bestimmten Winkel eingeschlagen, so ist es nicht notwendig, im Fernbereich auf der Seite des Fahrzeugs zu messen, welche diesen Fernbereich auf Grund der Winkelstellung der Räder nicht erreichen wird. In diesem Fall kann das Hörfenster früher enden. Generell können aber auch andere fahrdynamische Daten des Fahrzeugs zur Änderung der Messparameter der Abstandsmessung herangezogen werden. Das beschriebene Verfahren ist speziell zum Ausblenden unerwünschter Echos im unmittelbaren Nahbereich des Kraftfahrzeugs konzipiert. Hierfür können bspw. die Empfindlichkeit eines elektroakustischen Wandlers an die Fahrbahnoberfläche oder an Anbauteile des Kraftfahrzeugs, wie eine Anhängerkupplung angepasst werden.

Aus der WO 99/32318 ist ein Regelsystem für Geschwindigkeit und Abstand bei Fahrspurwechsel eines Kraftfahrzeuges bekannt. Bei einem abstandsbezogenen Fahrgeschwindigkeitsregelsystem für Kraftfahrzeuge mit einem elektronischen Steuergerät erfasst das elektronische Steuergerät mindestens ein Signal zur Erkennung eines Fahrspurwechsels oder eines Fahrspurwechselwunsches von der momentanen Fahrspur auf eine Zielfahrspur und mindestens ein Signal zur Schätzung der mittleren Geschwindigkeit der Fahrzeuge auf der Zielfahrspur. Das Steuergerät gibt im Falle eines Fahrspurwechsels oder Fahrspurwechselwunsches die Fahrzeuggeschwindigkeit und/oder den Abstand zu auf der momentanen Fahrspur vorausfahrenden Fahrzeug entsprechend dieser mittleren Geschwindigkeit vor.

Die EP 1 318 491 A1 offenbart ein Verfahren zu Erfassung von vor einem Fahrzeug befindlichen Hindernissen durch Adaption der prädizierten Fahrspurbreite in Abhängigkeiten von Navigationssystemdaten. Hierdurch wird das Fahrzeugverhalten im Rahmen eines Fahrgeschwindigkeitregelsystems verbessert.

Die DE 199 34 670 A1 und die WO 03/064215 A1 offenbaren ein Objektdetektionssystem mit mehreren Detektoren mit unterschiedlichen Detektionsreichweiten. Jeder der Detektoren hat einen fest zugeordneten überwachungsbereich. Eine Steuerung der Detektionsreichweite eines Detektors erfolgt nicht. Vielmehr wird aufgrund der gesammelten Daten entschieden, welche Objekte als nicht relevant anzusehen sind.

Die DE 101 49 146 A1 offenbart einen Geschwindigkeitsregler mit Abstandsfunktion für Kraftfahrzeuge mit einem Ortungssystem zur Erfassung der Ortungsdaten für Objekte, die sich vor dem Fahrzeug befinden, mit einer Auswerteeinrichtung zur Entscheidung, ob ein geortetes Objekt als relevantes Zielobjekt auf der eigenen Fahrspur zu behandeln ist. Die Sensoren werden mit gleich bleibender Leistung betrieben, so dass deren Leistung nicht vom Ortungssystem gesteuert wird.

Die vorliegende Erfindung beschäftigt sich daher mit dem Problem, für eine Vorrichtung eingangs erwähnter Art eine verbesserte Ausführungsform anzugeben, welche insbesondere den Komfort der Vorrichtung und somit deren Akzeptanz verbessert, um dadurch die Fahrsicherheit zu erhöhen.

Diese Aufgabe wird durch die Gegenstände der unabhängigen Ansprüche gelöst, vorteilhafte Ausgestaltungen sind Gegenstand der abhängigen Ansprüche.

Die Erfindung beruht auf dem allgemeinen Gedanken, eine Steuereinheit einer Vorrichtung zur Erfassung eines momentanen Abstandes eines Kraftfahrzeuges von einem Hindernis so auszubilden, dass diese einen vom Fahrzeug zukünftig durchfahrenden Fahrschlauch anhand dynamischer Fahrzeugdaten berechnen kann und zudem in der Lage ist, relevante Hindernisse, welche innerhalb des Fahrschlauches liegen, und nicht relevante Hindernisse, welche außerhalb des Fahrschlauches liegen, zu unterscheiden.

Herkömmliche Abstandssensoren erfassen alle in deren jeweiligem Erfassungsbereich liegende Hindernisse, unabhängig davon, ob diese auf Grund der Fahrtrichtung für das Kraftfahrzeug ein relevantes oder ein nicht relevantes Hindernis darstellen. Die Erfindung sieht deshalb vor, nur Objekte bzw. Hindernisse innerhalb des Fahrschlauches, d.h. innerhalb des für das Kraftfahrzeug relevanten Bereiches, als drohendes Kollisionsobjekt zu registrieren.

Die Berechnung des Fahrschlauches erfolgt an Hand statischer, in der Steuereinheit hinterlegter Daten, beispielsweise einer Fahrzeugkontur, und dynamischer Fahrzeugdaten, beispielsweise der Fahrtrichtung, der Fahrzeuggeschwindigkeit oder des Lenkwinkels, und gewährleistet somit eine klare Grenzziehung zwischen relevanten Objekten bzw. Hindernissen innerhalb des Fahrschlauches und nicht relevanten Objekten bzw. Hindernissen, welche außerhalb des Fahrschlauches liegen und deshalb vom Kraftfahrzeug nicht erreicht werden können, bzw. dieses nicht beeinträchtigen können.

Dies stellt im Vergleich zu bisher bekannten Systemen zur Abstandserfassung zwischen Kraftfahrzeugen und einem in Fahrtrichtung davor gelegenen Hindernis eine deutliche Verbesserung der Erkennungsgenauigkeit und damit einen Erhöhung der Fahrsicherheit dar.

Gemäß einer bevorzugten Ausführungsform kann vorgesehen sein, von der Steuereinheit die Reichweite der Abstandssensoren, welche jeweils einen variierbaren Erfassungsbereich aufweisen, auf den Fahrschlauch zu beschränken. Die Steuereinheit ist dabei zur Anpassung der Reichweite der Erfassungsbereiche der Abstandssensoren an seitliche Grenzen des Fahrschlauchs ausgebildet. Zusätzlich oder alternativ können außerhalb des Fahrschlauches detektierte Objekte als nicht relevante Objekte bzw. Hindernisse eingestuft und ausgeblendet werden. Dies bietet grundsätzlich die Möglichkeit die Unterscheidung der relevanten von den nicht relevanten Hindernissen auf zweierlei Arten durchzuführen, welche jede für sich oder in Kombination anwendbar sind und dadurch die Funktionssicherheit des Systems erhöhen.

Gemäß einer bevorzugten Ausführungsform kann vorgesehen sein, dass diejenigen Abstandssensoren, deren Erfassungsbereich vollständig im Fahrschlauch liegt, so von der Steuereinheit angesteuert werden, dass sie mit maximaler Reichweite arbeiten. Dies bietet den Vorteil, dass die Abstandssensoren im für das Fahrzeug relevanten Bereich gelegene Hindernisse frühzeitig erkennen. Die möglichst frühzeitige Erkennung vermindert eine Kollisionsgefahr zwischen dem Fahrzeug und dem relevanten Objekt und trägt somit wesentlich zur Erhöhung der Fahrsicherheit bei.

Entsprechend einer vorteilhaften Ausführung der erfindungsgemäßen Lösung kann die Steuereinheit mit einer Bremseinrichtung des Kraftfahrzeugs verbunden sein und zum automatischen Abbremsen des Kraftfahrzeugs ausgebildet sein. Detektiert ein Sensor ein im Fahrschlauch gelegenes und damit relevantes Hindernis, so meldet er dies an die Steuereinheit, welche das Kraftfahrzeug automatisch abbremst und dadurch eine Kollisionsgefahr vermindert. Die dabei aufgebrachte Bremskraft mit der das Fahrzeug abgebremst wird, kann dabei von der Steuereinheit beispielsweise in Abhängigkeit der Reichweite der Abstandssensoren, der Fahrtgeschwindigkeit oder der Lage des Hindernisses im Fahrschlauch abhängig sein und somit einen individuell, auf die jeweilige Situation abgestimmten, Bremsvorgang ermöglichen.

Zweckmäßig können die Abstandssensoren als Ultraschallsensoren ausgebildet sein. Ultraschallsensoren sind im Kraftfahrzeugbau langjährig erprobte und robuste Bauteile, welche preisgünstig herzustellen sind und individuell an unterschiedlichste Anforderungen anpassbar sind. Generell sind aber auch andere auf elektromagnetischen Wellen oder Schallwellen basierende Sensoren, beispielsweise Radarsensoren, denkbar.

Des Weiteren können die Abstandssensoren an einer Fahrzeugfront und/oder an einem Fahrzeugheck angeordnet werden. Hierdurch ist es möglich, den zukünftig zu durchfahrenden Fahrschlauch sowohl bei einer Vorwärtsfahrt als auch bei einer Rückwärtsfahrt zu berechnen und die Erfassungsbereiche der Sensoren einem jeweiligen Fahrschlauch, welcher in Fahrtrichtung vor dem Kraftfahrzeug gelegen ist, anzupassen. Zusätzlich kann vorgesehen sein, dass lediglich die in Fahrtrichtung vorne am Kraftfahrzeug gelegenen Abstandssensoren aktiviert werden, wogegen die in Fahrtrichtung am Kraftfahrzeug hinten gelegenen Abstandssensoren inaktiv sind.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich Bezugszeichen auf gleiche oder ähnliche oder funktional gleiche Bauteile beziehen.

Dabei zeigen:
- Fig. 1: ein Kraftfahrzeug mit Abstandssensoren mit maximalen Erfassungsbereichen,
- Fig. 2: eine Darstellung wie in Fig. 1, jedoch mit angepassten Erfassungsbereichen bei Geradeausfahrt,
- Fig. 3: eine Darstellung wie in Fig. 2, jedoch bei einer Kurvenfahrt.

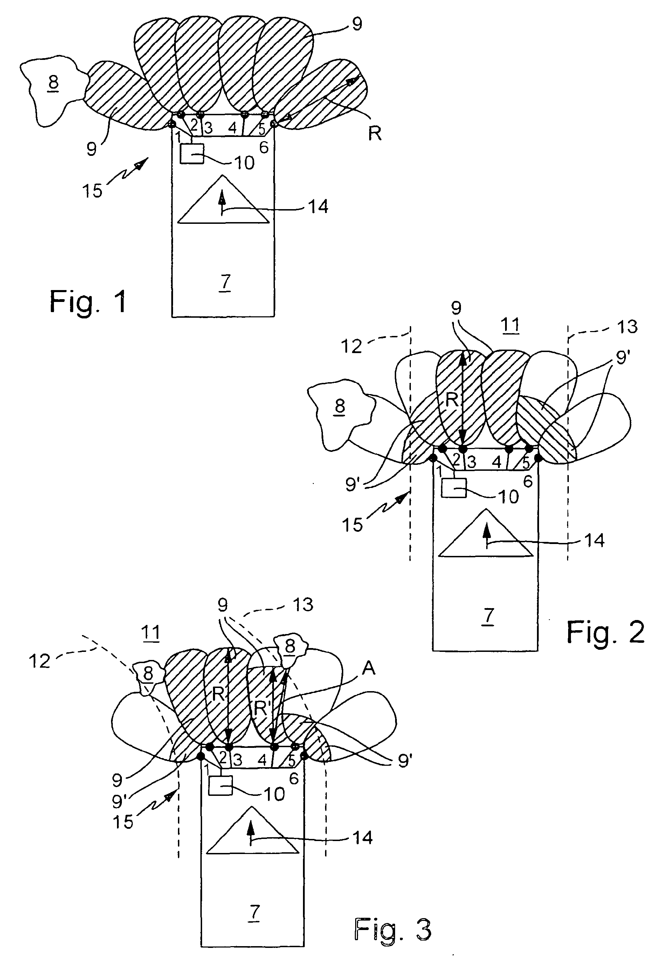

Entsprechend Fig. 1 weist eine Vorrichtung 15 mehrere Abstandssensoren 1 bis 6 auf, welche in Fahrtrichtung 14 gelegen vorne an einem Kraftfahrzeug 7 angeordnet sind. Die Vorrichtung 15 ist zur Erfassung eines momentanen Abstandes A zwischen dem Kraftfahrzeug 7 und einem Hindernis 8 ausgebildet. Die Anzahl der in Fig. 1 dargestellten Abstandssensoren 1 bis 6 ist dabei variabel. Zudem ist denkbar, dass zusätzlich zu den Abstandssensoren 1 bis 6 weitere nicht dargestellte Abstandssensoren in Fahrtrichtung 14 hinten gelegen am Kraftfahrzeug 7 angeordnet sind. Die Abstandssensoren 1 bis 6 senden jeweils eine Strahlungskeule aus, welche einen variierbaren Erfassungsbereich 9 erfasst. Die maximale Ausdehnung des Erfassungsbereichs 9 wird dabei durch eine Reichweite Rₘₐₓ gekennzeichnet. Sämtliche Abstandssensoren 1 bis 6 sind über nicht näher bezeichnete Verbindungsleitungen mit einer Steuereinheit 10 verbunden, welche in der Lage ist, die Reichweite R der einzelnen Erfassungsbereiche 9 unabhängig voneinander zu steuern bzw. anzupassen.

Gemäß Fig. 1 weisen alle Erfassungsbereiche 9 der Abstandssensoren 1 bis 6 ihre maximale Reichweite Rₘₐₓ auf und erfassen damit auch Seitenbereiche, welche das Kraftfahrzeug 7 auf Grund der Fahrtrichtung 14 nicht erreicht. Dies bedeutet, dass auch ein mögliches Hindernis 8, hier in Form eines Baumes, von dem Abstandssensor 1 erfasst wird, ohne das dieser das Kraftfahrzeug 7 direkt behindert. Es handelt sich hierbei um ein sog. nicht relevantes Hindernis 8, da es nicht in einen möglichen Fahrbereich bzw. Fahrschlauch 11 (vgl. Fig. 2 und 3) des Kraftfahrzeugs 7 hineinragt.

Zur Unterscheidung zwischen relevanten Hindernissen 8', welche sich innerhalb des Fahrschlauchs 11 befinden, und eine unmittelbare Kollisionsgefahr für das sich bewegende Kraftfahrzeug 7 darstellen, und einem nicht relevanten Hindernis 8, welches sich außerhalb des Fahrschlauches 11 befindet, ist die Steuereinheit 10 zur Berechnung eines vom Kraftfahrzeug zukünftig durchfahrenen Fahrschlauches 11 anhand dynamischer Fahrzeugdaten, beispielsweise der Fahrzeuggeschwindigkeit oder der Fahrtrichtung 14, und statischer Fahrzeugdaten, beispielsweise einer konstruktiven Fahrzeugkontur, sowie zur Anpassung der Erfassungsbereiche 9 der Abstandssensoren 1 bis 6 an den berechneten Fahrschlauch 11 ausgebildet. Zusätzlich oder alternativ kann die Steuereinheit 10, beispw. durch eine softwaretechnische Beschränkung, erfasste aber nicht relevante Hindernisse 8 ausblenden.

Die Unterscheidung zwischen relevanten Hindernissen 8', welche sich innerhalb des Fahrschlauchs 11 befinden und nicht relevanten Hindernissen 8 außerhalb des Fahrschlauches 11 ist somit prinzipiell auf zwei Arten möglich. Die beiden erwähnten Unterscheidungsmechanismen (Beschränkung der Erfassungsbereiche 9 der Abstandssensoren 1-6 auf seitliche Grenzen 12,13 des Fahrschlauches 11 und die softwaretechnische Ausblendung von Objekten außerhalb des Fahrschlauches 11) sind dabei jede für sich oder zusammen anwendbar.

Gemäß Fig. 2 ist die erfindungsgemäße Vorrichtung 15 in aktiviertem Zustand bei Geradeausfahrt des Kraftfahrzeugs 7 gezeigt. Die Steuereinheit 10 berechnet hierbei den vom Kraftfahrzeug 7 zukünftig durchfahrenen Fahrschlauch 11, der zwischen den beiden seitlichen Grenzen 12 und 13 in Fahrtrichtung vor dem Kraftfahrzeug 7 liegt. Die Steuereinheit 10 steuert dabei die Reichweite R der Erfassungsbereiche 9 der einzelnen Abstandssensoren 1 bis 6 in Abhängigkeit der beiden Grenzen 12 und 13, wobei die Abstandssensoren 3 und 4, deren Erfassungsbereiche 9 vollständig im Fahrschlauch 11 liegen, so von der Steuereinheit 10 angesteuert werden, dass sie mit maximaler Reichweite Rₘₐₓ arbeiten, wogegen die Abstandssensoren 1,2 und 5,6 derart von der Steuereinheit 10 angesteuert werden, dass deren Erfassungsbereich 9' im wesentlichen innerhalb des Fahrschlauches 11 liegen und durch die seitlichen Grenzen 12 und 13 in ihrer Ausdehnung begrenzt sind.

Das dargestellte Hindernis 8, welches außerhalb des Fahrschlauchs 11 liegt wird somit im Gegensatz zu Fig. 1 nicht vom Abstandssensor 1 erfasst. Alternativ ist wie oben erwähnt möglich, dass das außerhalb des Fahrschlauchs 11 liegende Hindernis 8 zwar erfasst wird, von der Steuereinheit 10 jedoch als nicht relevantes Hindernis 8 eingestuft und ausgeblendet wird.

Entsprechend Fig. 3 ist die erfindungsgemäße Vorrichtung 15 ebenfalls in aktiviertem Zustand, jedoch bei einer Kurvenfahrt dargestellt. Hierbei weisen die beiden Abstandssensoren 2 und 3 ihre maximale Reichweite Rₘₐₓ auf, wogegen die Abstandssensoren 1,4,5 und 6 in ihrer Reichweite R' beschränkt sind. Die Steuereinheit 10 berechnet hierbei an Hand der statischen und dynamischen Fahrzeugdaten, bei einer Kurvenfahrt, insbesondere an Hand des Lenkwinkels, den zukünftig vom Kraftfahrzeug 7 zu durchfahrenden Fahrschlauch 11 und passt die Reichweite R' an die seitlichen Grenzen 12 und 13 des Fahrschlauches 11 an. Das außerhalb des Fahrschlauches 11 liegende Objekt bzw. Hindernis 8 wird gemäß Fig. 3 von der reduzierten Reichweite R' des Abstandssensors 4 nicht erfasst bzw. registriert. Demgegenüber wird das relevante Hindernis 8', welches im zukünftig vom Fahrzeug 7 durchfahrenen Fahrschlauch 11 liegt vom Abstandssensor 2 erfasst. Sinngemäß gilt auch hier das für die zwei Unterscheidungsarten erläuterte.

Die Steuereinheit 10 ist dabei mit einer nicht dargestellten Bremseinrichtung des Kraftfahrzeugs 7 verbunden und bewirkt durch ein von der Steuereinheit 10 ausgesandtes Steuersignal ein automatisches Abbremsen des Kraftfahrzeugs 7. Durch das automatische Abbremsen wird eine Kollision des Kraftfahrzeugs 7 mit dem Hindernis 8' vermieden und dadurch die Fahrsicherheit erhöht.

Die Abstandssensoren 1 bis 6 können als Sensoren mit verschiedenen Messverfahren ausgebildet sein, beispielsweise als Ultraschall-, Radar- oder optische Sensoren und an einer Fahrzeugfront und/oder an einem Fahrzeugheck angeordnet sein. Die Anpassung der Erfassungsbereiche 9 durch die Steuereinheit 10 erfolgt dynamisch in Abhängigkeit der momentanen Fahrzeugdaten, wie beispielsweise Fahrzeuggeschwindigkeit, Fahrtrichtung 14, Fahrzeugbeschleunigung, Lenkwinkeländerung, Sensorfunktion oder Messverfahren.

Zusammenfassend lassen sich die wesentlichen Merkmale der Erfindung wie folgt charakterisieren:

Die Erfindung sieht vor, eine Steuereinheit 10 einer Vorrichtung 15 zur Erfassung eines momentanen Abstandes A eines Kraftfahrzeuges 7 von einem Hindernis 8,8' so auszubilden, dass diese einen vom Fahrzeug 7 zukünftig durchfahrenden Fahrschlauch 11 anhand statischer und dynamischer Fahrzeugdaten berechnen kann und zudem in der Lage ist, relevante Hindernisse 8', welche innerhalb des Fahrschlauches 11 liegen, und nicht relevante Hindernisse 8, welche außerhalb des Fahrschlauches 11 liegen, zu unterscheiden.

Die Berechnung des Fahrschlauches 11 gewährleistet somit eine exakte Differenzierung zwischen relevanten und nicht relevanten Objekten bzw. Hindernissen 8 und 8', wodurch eine Erhöhung der Fahrsicherheit erreicht werden kann.

Diejenigen Abstandssensoren 1 bis 6, deren Erfassungsbereich 9 vollständig im Fahrschlauch 11 liegt, werden dabei von der Steuereinheit 10 derart angesteuert, dass sie mit maximaler Reichweite Rₘₐₓ arbeiten. Dies bietet den Vorteil, dass die in diesem Bereich gelegenen Hindernisse 8' frühzeitig erkannt werden.

Des weiteren kann die Steuereinheit 10 mit einer Bremseinrichtung des Kraftfahrzeugs 7 verbunden sein und zum automatischen Abbremsen des Kraftfahrzeugs 7 ausgebildet sein. Detektiert ein Abstandssensor 1 bis 6 ein im Fahrschlauch 11 gelegenes und damit relevantes Hindernis 8', so meldet er dies an die Steuereinheit 10, welche das Kraftfahrzeug 7 automatisch abbremst und dadurch eine Kollisionsgefahr vermindert.

Die Abstandssensoren 1 bis 6 können dabei wahlweise an einer Fahrzeugfront und/oder an einem Fahrzeugheck angeordnet werden.

## Patentansprüche

1. Vorrichtung (15) zur Erfassung eines momentanen Abstandes (A) eines Kraftfahrzeugs (7) von einem Hindernis (8,8'), mit Abstandssensoren (1-6) und mit einer Steuereinheit (10), wobei die Steuereinheit (10) zur Berechnung eines vom Kraftfahrzeug (7) zukünftig durchfahrenen Fahrschlauchs (11) anhand statischer und dynamischer Fahrzeugdaten ausgebildet ist und die Steuereinheit (10) zur Unterscheidung von relevanten Hindernissen (8'), welche innerhalb des Fahrschlauches (11), und nicht relevanten Hindernissen (8), welche außerhalb des Fahrschlauches (11) liegen, ausgebildet ist, **dadurch gekennzeichnet,**
**dass** die Abstandssensoren (1-6) jeweils einen variierbaren Erfassungsbereich (9) aufweisen, dass die Steuereinheit (10) zur Anpassung der Reichweite (R) der Erfassungsbereiche (9) der Abstandssensoren (1-6) an seitliche Grenzen (12,13) des Fahrschlauchs (11) ausgebildet ist und dass diejenigen Abstandssensoren (1-6), deren Erfassungsbereich (9) vollständig im Fahrschlauch (11) liegt, von der Steuereinheit (10) so angesteuert werden, dass sie mit maximaler Reichweite (Rₘₐₓ) arbeiten.

2. Vorrichtung nach Anspruch 1, **dadurch gekennzeichnet, dass** die Steuereinheit (10) zur Ausblendung von erfassten, nicht relevanten Hindernissen (8) ausgebildet ist.

3. Vorrichtung nach einem der Ansprüche 1 bis 2, **dadurch gekennzeichnet, dass** die Steuereinheit (10) mit einer Bremseinrichtung des Kraftfahrzeugs (7) verbunden ist und zum automatischen Abbremsen des Kraftfahrzeugs (7) ausgebildet ist.

4. Vorrichtung nach einem der Ansprüche 1 bis 3, **dadurch gekennzeichnet, dass** die Abstandssensoren (1-6) als Ultraschall- und/oder als Radar- und/oder als optische Sensoren ausgebildet sind.

5. Vorrichtung nach einem der Ansprüche 1 bis 4, **dadurch gekennzeichnet, dass** die Abstandssensoren (1-6) an einer Fahrzeugfront und/oder an einem Fahrzeugheck angeordnet sind.

6. Vorrichtung nach einem der Ansprüche 1 bis 5, **dadurch gekennzeichnet, dass** als dynamische Fahrzeugdaten zumindest ein Element aus folgender Gruppe verwendet wird: Fahrzeuggeschwindigkeit, Fahrtrichtung, Fahrzeugbeschleunigung, Lenkwinkel, Lenkwinkeländerung, Sensorfunktion.

7. Vorrichtung nach einem der Ansprüche 1 bis 6, **dadurch gekennzeichnet, dass** als statische Fahrzeugdaten zumindest eine Fahrzeugkontur verwendet wird.

8. Verfahren zur Erfassung eines momentanen Abstandes (A) eines Kraftfahrzeugs (7) von einem Hindernis (8,8'), mit Abstandssensoren (1-6) und mit einer Steuereinheit (10), wobei die Steuereinheit (10) einen vom Kraftfahrzeug (7) zukünftig durchfahrenen Fahrschlauch (11) anhand statischer und dynamischer Fahrzeugdaten berechnet und relevante Hindernisse (8'), welche innerhalb des Fahrschlauches (11), von nicht relevanten Hindernissen (8), welche außerhalb des Fahrschlauches (11) liegen, unterscheidet, **dadurch gekennzeichnet, dass** die Steuereinheit (10) die Reichweite (R) der Erfassungsbereiche (9) der einzelnen Abstandssensoren (1 bis 6) so steuert, dass Abstandssensoren (3 und 4), deren Erfassungsbereiche (9) vollständig im Fahrschlauch (11) liegen mit maximaler Reichweite (Rₘₐₓ) arbeiten, wogegen andere Abstandssensoren (1,2 und 5,6) von deren maximaler Reichweite (Rₘₐₓ) abweichend angesteuert werden, so dass deren Erfassungsbereich (9') im Wesentlichen innerhalb des Fahrschlauches (11) liegt.

9. Verfahren nach Anspruch 8, **dadurch gekennzeichnet, dass** die Abstandssensoren (1-6) jeweils einen variierbaren Erfassungsbereich (9) aufweisen, dass die Steuereinheit (10) die Reichweite (R) der Erfassungsbereiche (9) der Abstandssensoren (1-6) an seitliche Grenzen (12,13) des Fahrschlauchs (11) anpasst.

10. Verfahren nach Anspruch 8 oder 9, **dadurch gekennzeichnet, dass** die Steuereinheit (10) erfasste, nicht relevante Hindernisse (8) ausblendet.

11. Verfahren nach einem der Ansprüche 8 bis 10, **dadurch gekennzeichnet, dass** die Steuereinheit (10) mit einer Bremseinrichtung des Kraftfahrzeugs (7) verbunden ist und das Kraftfahrzeug (7) auf ein Steuersignal der Steuereinheit (10) automatisch abbremst.

12. Verfahren nach einem der Ansprüche 8 bis 11, **dadurch gekennzeichnet, dass** die Abstandssensoren (1-6) mit einem auf elektromagnetischen Wellen oder Schallwellen basierenden Messprinzip arbeiten.

13. Verfahren nach einem der Ansprüche 8 bis 12, **dadurch gekennzeichnet, dass** zur Berechnung des Fahrschlauchs (11) zumindest ein Element aus folgender Gruppe verwendet wird: Fahrzeuggeschwindigkeit, Fahrtrichtung, Fahrzeugbeschleunigung, Lenkwinkel, Lenkwinkeländerung, Sensorfunktion, Fahrzeugkontur.

## Claims

1. A device (15) for detecting a momentary distance (A) between a motor vehicle (7) and an obstacle (8, 8'), comprising distance sensors (1-6) and a control unit (10), wherein the control unit (10) is designed to calculate a driving path (11), to be traveled through in future by the motor vehicle (7), using static and dynamic vehicle data, and the control unit (10) is designed to differentiate between relevant obstacles (8') which are located within the driving path (11), and irrelevant obstacles (8) which are located outside the driving path (11), **characterized in that**
the distance sensors (1-6) each have a variable detection area (9), **in that** the control unit (10) is designed to adapt the range (R) of the detection areas (9) of the distance sensors (1-6) to lateral boundaries (12, 13) of the driving path (11) and **in that** those distance sensors (1-6) whose detection area (9) is located completely in the driving path (11) are actuated by the control unit (10) in such a way that they operate with maximum range (Rₘₐₓ).

2. The device as claimed in claim 1, **characterized in that** the control unit (10) is designed to gate out irrelevant obstacles (8) which are detected.

3. The device as claimed in one of claims 1 to 2, **characterized in that** the control unit (10) is connected to a brake device of the motor vehicle (7) and is designed to automatically brake the motor vehicle (7).

4. The device as claimed in one of claims 1 to 3, **characterized in that** the distance sensors (1-6) are embodied as ultrasonic and/or as radar and/or as optical sensors.

5. The device as claimed in one of claims 1 to 4, **characterized in that** the distance sensors (1-6) are arranged on the front of a vehicle and/or on the rear of a vehicle.

6. The device as claimed in one of claims 1 to 5, **characterized in that** at least one element from the following group is used as dynamic vehicle data: vehicle velocity, direction of travel, vehicle acceleration, steering angle, change in steering angle, sensor function.

7. The device as claimed in one of claims 1 to 6, **characterized in that** at least one vehicle contour is used as static vehicle data.

8. A method for detecting a momentary distance (A) between a motor vehicle (7) and an obstacle (8, 8'), having distance sensors (1-6) and having a control unit (10), wherein the control unit (10) calculates a driving path (11), to be traveled through in future by the motor vehicle (7), using static and dynamic vehicle data and differentiates relevant obstacles (8') within the driving path (11) from irrelevant obstacles (8) which are located outside the driving path (11), **characterized in that** the control unit (10) controls the range (R) of the detection areas (9) of the individual distance sensors (1 to 6) in such a way that distance sensors (3 and 4) whose distance areas (9) are located completely on the driving path (11) operate with maximum range (Rₘₐₓ) while other distance sensors (1, 2 and 5, 6) are actuated outside their maximum range (Rₘₐₓ) so that their detection area (9') is located essentially within the driving path (11).

9. The method as claimed in claim 8, **characterized in that** the distance sensors (1-6) each have a variable detection area (9), **in that** the control unit (10) adapts the range (R) of the detection areas (9) of the distance sensors (1-6) to lateral boundaries (12, 13) of the driving path (11).

10. The method as claimed in claim 8 or 9, **characterized in that** the control unit (10) gates out irrelevant obstacles (8) which have been detected.

11. The method as claimed in one of claims 8 to 10, **characterized in that** the control unit (10) is connected to a brake device of the motor vehicle (7), and the motor vehicle (7) is braked automatically in response to a control signal of the control unit (10).

12. The method as claimed in one of claims 8 to 11, **characterized in that** the distance sensors (1-6) operate with a measuring principle which is based on electromagnetic waves or sound waves.

13. The method as claimed in one of claims 8 to 12, **characterized in that** at least one element from the following group is used to calculate the driving path (11): vehicle velocity, direction of travel, vehicle acceleration, steering angle, change in steering angle, sensor function, vehicle contour.

## Revendications

1. Dispositif (15) de détection de l'écart momentané (A) entre un véhicule automobile (7) et un obstacle (8, 8'), comprenant des détecteurs d'écart (1-6) et une unité de commande (10), l'unité de commande (10) étant configurée pour calculer une trajectoire de déplacement (11) qui sera ultérieurement parcourue par le véhicule automobile (7) au moyen de données statiques et dynamiques du véhicule automobile et l'unité de commande (10) étant configurée pour différencier les obstacles pertinents (8'), qui se trouvent à l'intérieur de la trajectoire de déplacement (11), et les obstacles non pertinents (8) qui se trouvent en dehors de la trajectoire de déplacement (11), **caractérisé en ce que** les détecteurs d'écart (1-6) présentent respectivement une zone de détection variable (9), que l'unité de commande (10) est configurée pour adapter la portée (R) des zones de détection (9) des détecteurs d'écart (1-6) aux limites latérales (12, 13) de la trajectoire de déplacement (11) et que ces détecteurs d'écart (1-6) dont la zone de détection (9) se trouve entièrement dans la trajectoire de déplacement (11) sont commandés par l'unité de commande (10) de telle sorte qu'ils fonctionnent avec la portée maximale (Rmax).

2. Dispositif selon la revendication 1, **caractérisé en ce que** l'unité de commande (10) est configurée pour masquer les obstacles non pertinents (8) détectés.

3. Dispositif selon l'une des revendications 1 à 2, **caractérisé en ce que** l'unité de commande (10) est reliée avec un dispositif de freinage du véhicule automobile (7) et elle est configurée pour freiner automatiquement le véhicule automobile (7).

4. Dispositif selon l'une des revendications 1 à 3, **caractérisé en ce que** les détecteurs d'écart (1-6) sont réalisés sous la forme de détecteurs à ultrasons et/ou de détecteurs radar et/ou de détecteurs optiques.

5. Dispositif selon l'une des revendications 1 à 4, **caractérisé en ce que** les détecteurs d'écart (1-6) sont montés sur un avant du véhicule et/ou sur un arrière du véhicule.

6. Dispositif selon l'une des revendications 1 à 5, **caractérisé en ce qu'**au moins un élément du groupe suivant est utilisé comme données dynamiques du véhicule : vitesse du véhicule, sens de déplacement, accélération du véhicule, angle de braquage, modification de l'angle de braquage, fonctionnement du détecteur.

7. Dispositif selon l'une des revendications 1 à 6, **caractérisé en ce qu'**au moins un contour du véhicule est utilisé comme données statiques du véhicule.

8. Procédé de détection d'un écart momentané (A) entre un véhicule automobile (7) et un obstacle (8, 8'), comprenant des détecteurs d'écart (1-6) et une unité de commande (10), l'unité de commande (10) calculant une trajectoire de déplacement (11) qui sera ultérieurement parcourue par le véhicule automobile (7) au moyen de données statiques et dynamiques du véhicule automobile et faisant la différence entre les obstacles pertinents (8') qui se trouvent à l'intérieur de la trajectoire de déplacement (11) et les obstacles non pertinents (8) qui se trouvent en dehors de la trajectoire de déplacement (11), **caractérisé en ce que** l'unité de commande (10) commande la portée (R) des zones de détection (9) des détecteurs d'écart (1 à 6) individuels de telle sorte que les détecteurs d'écart (3 et 4), dont les zones de détection (9) se trouvent entièrement dans la trajectoire de déplacement (11), fonctionnent avec la portée maximale (Rmax), alors que les autres détecteurs d'écart (1, 2 et 5, 6) sont commandés de manière s'écartant de leur portée maximale (Rmax) de sorte que leur zone de détection (9') se trouve pour l'essentiel à l'intérieur de la trajectoire de déplacement (11).

9. Procédé selon la revendication 8, **caractérisé en ce que** les détecteurs d'écart (1-6) présentent respectivement une zone de détection (9) variable, que l'unité de commande (10) adapte la portée (R) des zones de détection (9) des détecteurs d'écart (1-6) aux limites latérales (12, 13) de la trajectoire de déplacement (11).

10. Procédé selon la revendication 8 ou 9, **caractérisé en ce que** l'unité de commande (10) masque les obstacles non pertinents (8) détectés.

11. Procédé selon l'une des revendications 8 à 10, **caractérisé en ce que** l'unité de commande (10) est reliée avec un dispositif de freinage du véhicule automobile (7) et le véhicule automobile (7) freine automatiquement sur un signal de commande de l'unité de commande (10).

12. Procédé selon l'une des revendications 8 à 11, **caractérisé en ce que** les détecteurs d'écart (1-6) fonctionnent avec un principe de mesure basé sur des ondes électromagnétiques ou sur des ondes sonores.

13. Procédé selon l'une des revendications 8 à 12, **caractérisé en ce qu'**au moins un élément du groupe suivant est utilisé pour calculer la trajectoire de déplacement (11) : vitesse du véhicule, sens de déplacement, accélération du véhicule, angle de braquage, modification de l'angle de braquage, fonctionnement du détecteur, contour du véhicule.
